# EUROPÄISCHE PATENTANMELDUNG

(11) **EP 0 619 669 A2**
(43) Veröffentlichungstag der Anmeldung: **12.10.1994**
(21) Anmeldenummer: 94104176.6
(22) Anmeldetag: 17.03.1994
(51) Int. Cl.: H04M 1/72, H04Q 7/04

(54) **Schnittstelleneinrichtung für Datenübertragungsfunkverbindung**

(30) Priorität: 22.03.1993 CH 861/93; 06.08.1993 CH 2356/93
(71) Anmelder: ASCOM BUSINESS SYSTEMS AG, CH-4503 Solothurn (CH)
(72) Erfinder: Künzi, Jürg, CH-4500 Solothurn (CH)
(74) Vertreter: Schwerdtel, Eberhard, Dr.

(57) **Zusammenfassung**

Die Schnittstelleneinrichtung (10) dient zum Anschliessen eines Datenendgerätes (14) an ein Telekommunikationsnetz (11). Sie umfasst ein Basisgerät (19) und ein Handgerät (20) eines Schnurlostelefons, eine mechanische Halterung (23) und eine optische Schnittstelle (25). Diese Schnittstelle ist aufgeteilt auf zwei unabhängige Hälften, die im Handgerät (20) bzw. in einer Führung (27) eines Adaptergerätes (23) angeordnet sind. Die Führung (27), das Handgerät (20) und die Schnittstellen- Hälften sind so aufeinander abgestimmt, dass sie in engen mechanischen bzw. optischen Kontakts bringbar sind. Ist ein solcher Kontakt hergestellt, dann kann über die Schnittstelle (25) und das Netz (11) eine Datenverbindung zwischen dem genannten (14) und einem beliebigen weiteren Endgerät (15) aufgebaut und unterhalten werden.

## Beschreibung

Die Erfindung betrifft eine Schnittstelleneinrichtung zum Anschliessen eines beliebigen Datenendgerätes an ein Telekommunikationsnetz. Die Erfindung betrifft weiter ein Verfahren zum Aufbau einer Datenübertragungsverbindung zwischen zwei beliebigen, paarweise zusammenschaltbaren Datenendgeräten.

Datenübertragungsverbindungen zwischen Datenendgeräten sind allgemein bekannt. Solche Verbindungen lassen sich bezüglich ihrer Übertragungsrate, der Modulationsart, des physikalischen Trägers usw. unterscheiden. Es sind weiter Modems bekannt, die das Zusammenwirken von örtlich getrennten Datenendgeräten über ein Telekommunikationsnetz ermöglichen, das im Grunde nicht für die Übertragung von Daten der gewünschten Art konzipiert wurde.

Es sind weiter eine ganze Reihe von Normschnittstellen bekannt, die den Anschluss von digitalen Endgeräten an ein Telekommunikationsnetz vereinfachen. Diese Schnittstellen beinhalten u.a. Protokolle für den Verbindungsauf- und -abbau.

Für Daten produzierende oder benützende Geräte, die nur selten mit einem anderen Gerät kommunizieren müssen, ist der Aufwand für einen festen Anschluss an eine Datenverbindung oftmals zu hoch. Für solche Geräte wird daher im allgemeinen auf einen festen Anschluss verzichtet und die Datenübertragung anders organisiert, beispielsweise durch den Austausch von Disketten.

Es ist nunmehr die Aufgabe der Erfindung, eine Methode anzugeben, die auf einfache Weise das Zusammenwirken örtlich beliebig verteilter, Daten verwendender Geräte über ein Telekommunikationsnetz ermöglicht, ohne dass diese Geräte fest an das Netz angeschlossen sein müssten.

Die Lösung dieser Aufgabe ist durch den kennzeichnenden Teil der unabhängigen Ansprüche gegeben. Die anderen Ansprüche geben Ausgestaltungen der Erfindung an.

Im folgenden wird die Erfindung anhand von drei Figuren beispielsweise näher beschrieben. Es zeigen:
Fig. 1 - Schema einer Übertragungsvorrichtung für Daten
Fig. 2 - Schematische Ansicht eines optischen Kopplers
Fig. 3 - Schnittstelle zwischen einem Adaptergerät und einem Funkgerät.

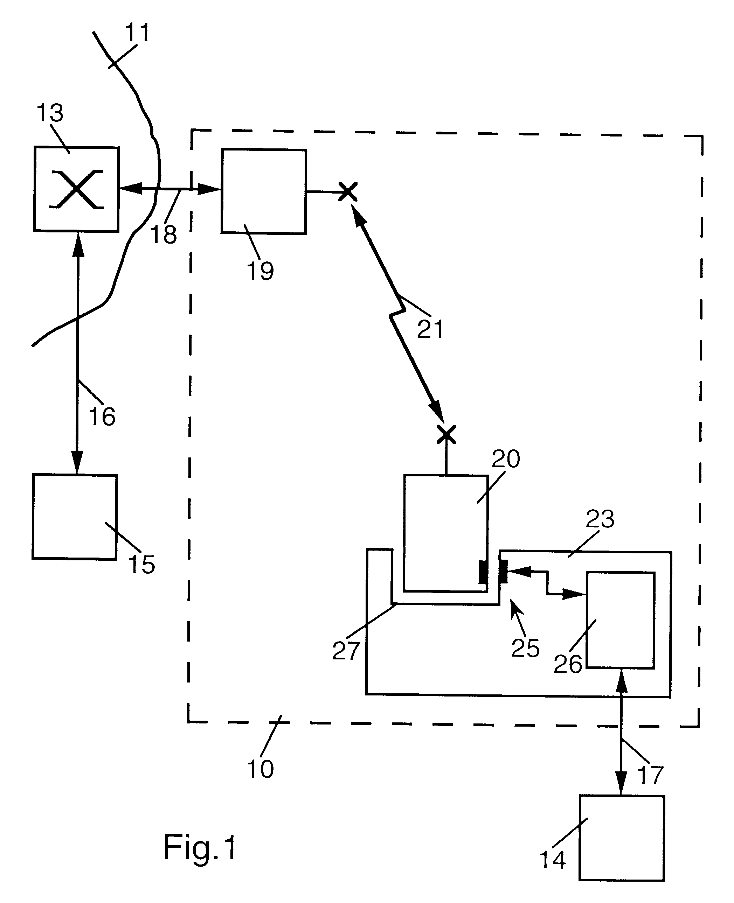

Fig. 1 zeigt schematisch eine Übertragungsvorrichtung für Daten. Die Daten werden zwischen zwei beliebigen, paarweise zusammenarbeitsfähigen Datenendgeräten 14, 15 ausgetauscht. Der räumliche Abstand der beiden Datenendgeräten 14, 15 spielt dabei keine Rolle; er kann mit einigen Metern gering sein oder auch interkontinental weit.

Die Übertragungsvorrichtung umfasst zum einen ein beliebiges Telekommunikationsnetz 11, z.B. ein ISDN-Netz, mit wenigstens einer Zentrale 13 sowie zwei Anschlussleitungen 16, 18. Sie umfasst zum anderen eine Schnittstelleneinrichtung 10 mit zwei gepaarten Funkgeräten, insbesondere ausgebildet als Basisgerät 19 und zugeordnetes Handgerät 20 eines Schnurlostelefons, sowie mit einem Adaptergerät 23.

Im Falle einer Kommunikationsverbindung sind das Basisgerät 19 und das Handgerät 20 über eine Funkstrecke 21 miteinander verbunden und das Basisgerät 19 zum einen der beiden Datenendgeräte 15 durch das Telekommunikationsnetz 11 durchgeschaltet.

Das Adaptergerät 23 besteht aus einer mechanischen Halterung, in der eine bevorzugt konkave Führung 27 enthalten ist, z.B. eine wannen- oder nutförmige Führung. Die Führung 27 hat die Aufgabe, das Handgerät 20 zeitweise aufzunehmen und in räumlich engem Kontakt zum Adaptergerät 23 fix zu halten. Hierbei fügen sich die beiden Hälften einer optischen Schnittstelle 25 zusammen, die zum einen dem Handgerät 20 und zum anderen dem Adaptergerät 23 zugeordnet sind. Das Adaptergerät 23 umfasst schliesslich noch eine Anpasselektronik 26, die gegenüber dem anderen Datenendgerät 14 und gegenüber der einen Hälfte der optischen Schnittstelle 25 die Funktion einer elektronischen Schnittstelle ausübt. Diese Schnittstelle kann gegenüber dem einen Datenendgerät 14 z.B. eine V.24-Schnittstelle sein. Hierdurch ist eine Datenverbindung zwischen dem Datenendgerät 14 und der optischen Schnittstelle 25 gegeben.

Die beiden Datenendgeräte 14, 15 sind - wie bereits erwähnt - grundsätzlich beliebige, Daten erzeugende und/oder Daten empfangende Geräte, die räumlich zum Telekommunikationsnetz 11 beliebig stationiert sein können und die geeignet sind für gemeinsame Kommunikation bzw. einen Datenaustausch. Als Beispiel sei folgendes genannt: Das eine Datenendgerät 15 bildet ein Zentralgerät, das an einem ersten Ort, z.B in einem Bürogebäude steht und eine Rechnereinheit und einen Drucker umfasst. Das andere Datenendgerät 14 befindet sich örtlich abgesetzt an einer zweiten Stelle, beispielsweise in einem Privathaus und ist ein Personalcomputer, der im Inselbetrieb, d.h. ohne festen Anschluss an das Netz 11 betrieben wird. Der Abstand zwischen dem ersten und dem zweiten Gerät wird vor allem durch das Telekommunikationsnetz 11 überbrückt. Dieses Netz 11 ist z.B. ein ISDN-Netz (Integrated Services Digital Network), an das das Zentralgerät 15 mittels der Leitung 16 und das Basisgerät 19 mittels der Leitung 18 angeschlossen ist. Das Basisgerät 19 ist weiter schnurlos über die Funkstrecke 21 mit dem Handgerät 20 verbunden, d.h. im allgemeinen nur potentiell, jedoch im Falle einer durchgeschalteten Kommunikationsverbindung jeweils konkret. Schliesslich ist der Personalcomputer 14 über die Anschlussleitung 17 sowie die genannte elektronische Schnittstelle, z.B. die V.24-Schnittstelle, und den optischen Koppler 25 mit dem Handgerät 20 verbunden

Der Aufbau einer Verbindung zum Übertragen von Daten zwischen den beschriebenen Datenendgeräten 14, 15 bzw. zwischen dem Personalcomputer 14 und dem Zentralgerät 15 erfolgt wie folgt: Als erstes müssen das Zentralgerät 15 und das Basisgerät 19 an das Netz 11 angeschlossen sein, was im allgemeinen aufgrund ständiger Benutzung stetig der Fall ist. Zum zweiten muss das andere Endgerät 14, d.h. der Personalcomputer über die Leitung 17 mit dem Adaptergerät 23 verbunden werden. Sobald dies geschehen ist, kann vom Handgerät 20 aus durch übliche Nummernwahl eine Kommunikationsverbindung zwischen dem Handgerät 20 und dem Zentralgerät 15 aufgebaut werden. Sobald diese Verbindung über die Funkstrecke 21 und das Netz 11 besteht, wird das Handgerät 20 in die Führung 27 des Adaptergerätes 23 eingesteckt und damit die optische Schnittstelle 25 aktiviert. Hierdurch wird die Datenverbindung zwischen dem Zentralgerät 15 und dem Personalcomputer 14 geschlossen. Im weiteren können die beiden genannten Endgeräte 14, 15 beliebig miteinander kommunizieren, d.h. in beiden Richtungen Befehle, Information und/oder Daten austauschen. Die Dauer des Datenaustausches wird dabei im allgemeinen nur von kurzer Dauer sein, d.h. nur einige Minuten betragen. Danach kann das Handgerät wieder entfernt und anderweitig eingesetzt werden

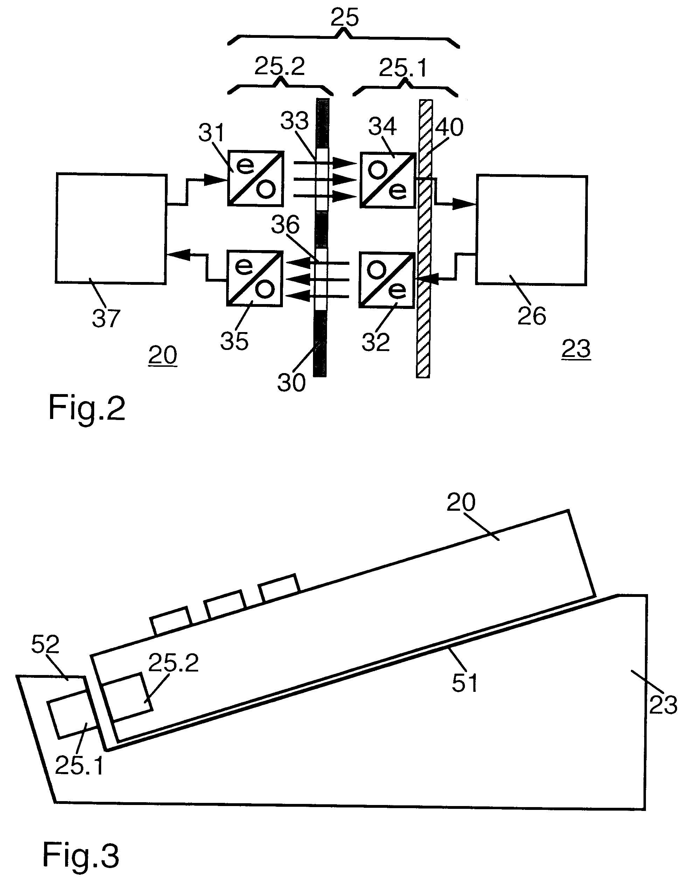

Fig. 2 zeigt eine schematische, geschnittene Ansicht des optischen Kopplers 25. Dieser Koppler ist auf zwei gleichartige Hälften 25.1, 25.2 aufgeteilt, die dem Adaptergerät 23 bzw. dem Handgerät 20 zugeordnet sind. Beide Hälften umfassen paarweise und gegenseitig einander zugeordnete elektrooptische und optoelektrische Wandler, z.B. zwei Laserdioden 31, 32 und zwei Fototransistoren 34, 35. Die Elemente 31 und 35 sind elektrisch mit den Elektronikeinheiten 37 des Handgerätes 20 verbunden, die Elemente 32, 34 entsprechend mit der Anpasselektronik 26 des Adaptergerätes 23. Die Laserdiode 31 und der Fototransistor 35 des Handgerätes 20 sind jeweils einem Fenster 33 bzw. 36 in der Gehäusewandung 30 dieses Gerätes 20 zugeordnet.

Die Fenster 33, 36 sind entweder als Bohrungen in der Gehäusewandung 33 ausgebildet oder sind bevorzugt Wandbereiche, die für die verwendete Wellenlänge, insbesondere für den Bereich des infraroten Lichts, gut durchlässig sind.

Die Laserdiode 32 und der Fototransistor 34 der Datenquelle 23 ragen dem gegenüber z.B. offen in die mechanische Führung 27. Sie sind hierzu beispielsweise auf der Oberfläche einer Leiterplatte 40 montiert, die eine Wandung dieser Führung 27 bildet.

Die mechanische Führung 27 ist insgesamt so ausgebildet, dass sie das eingelegte oder eingeschobene Handgerät 20 so fixiert, dass dessen Hälfte 25.2 des optischen Kopplers 25 mit der Hälfte 25.1 des Adaptergerätes 23 in optimalen Wirkkontakt kommt. Dies bedeutet, dass die Elemente 31, 32, 34, 35 paarweise und nur durch die Fenster 33 bzw. 36 (und eventuelle Fenster im Adaptergerät) getrennt einander gegenüberliegen. Dies ist durch Begrenzungen, Nocken usw. problemlos machbar.

Fig. 3 zeigt eine vorteilhafte Ausgestaltung des Adaptergerätes 23. Dieses weist eine mehr oder weniger schräg gestellte Mulde 51 auf, in die das Handgerät 20 von oben her einlegbar ist. Hierbei bleiben dessen Bedienungs- und Anzeigeelemente frei zugänglich. Die optische Schnittstelle 25 ist an der unteren Anschlagfläche 52 der Mulde 51 angeordnet. Dies bedeutet, dass die erste Hälfte 25.1 des Kopplers 25 an dieser Fläche 52 und die zweite Hälfte 25.2 an der unteren Stirnfläche des Handgerätes 20 plaziert ist. Die mechanische Fixierung des Handgerätes 20 wird durch die Seitenwände und den Boden der Mulde 51 gewährleistet, der sichere Zusammenhalt der beiden Hälften 25.1, 25.2 durch den Druck bzw. das Gewicht des schräg liegenden Handgerätes 20.

Das allgemeine Prinzip der Erfindung ist mit dem bisher beschriebenen Ausführungsbeispiel nicht erschöpft. Es gibt vielmehr eine erhebliche Anzahl von Varianten, von denen nachfolgend einige näher erläutert werden.

Statt des genannten Schnurlostelefons ist jedes digital arbeitende, manuell leicht handhabbare und mobile Gerät einsetzbar, das über eine Funkstrecke 21 begrenzter Reichweite mit einem allgemeinen Telekommunikationsnetz 11 verbindbar ist. Dies ist z.B. ein Mobilfunk-Telefon des Natel-D-Typs, zusammen mit jeweils einer der ortsfest installierten Antennen- und Netzstationen des zugehörigen Mobilfunknetzes.

Als geeignete Geräte 20 kommen weiter auch in der Hand tragbare Funkgeräte in Betracht, die ausschliesslich über eine Funkstrecke 21, also unter Ausschluss eines Netzes 11, mit dem Zentralgerät 15 kommunizieren. Hierbei besteht jedoch eine erhebliche Einschränkung bezüglich der örtlichen Abstände zwischen dem Zentralgerät 15 und dem Adaptergerät 23. Das verwendete Funkgerät kann ergänzend zu seinen Normalfunktionen für die hier beschriebene Datenanwendung ausgerüstet sein, oder auch abgemagert bezüglich seiner Sprech- und Höhrfunktionen.

Es kommt weiter infrage, dass das eine Endgerät 15 direkt an das Basisgerät 19 des genannten Schnurlostelefons angeschlossen ist ohne Zwischenschaltung des Netzes 11, oder nur unter Zwischenschaltung eines Minimalnetzes, z.B. einer kleinen Hauszentrale mit wenigen Anschlüssen.

Der optische Koppler 25 bildet eine besonders geeignete Möglichkeit zum Herstellen einer kontaktfreien, nichtelektrischen Wirkverbindung zwischen dem Handgerät 20 und der Anpasselektronik 26 im Adaptergerät 23. Grundsätzlich kann jedoch auch jeder andere kontaktfreie Signalkoppler verwendet werden, z.B. ein induktiv wirkender Koppler. Direkte metallische Kontakte, z.B. in Form von Steckkontakten kommen weniger infrage, da solche Kontakte bei den hohen Frequenzen von z.B. Schnurlostelefonen leicht als Antenne wirken können und damit eine potentielle Fehlerquelle bilden.

Statt eines Adaptergerätes 23 mit muldenförmiger Führung 27 kann eine oben offene, im wesentlichen rohrförmige Führung verwendet werden, in die das Handgerät 20 von oben her einsteckbar ist. Hierbei lässt sich der optische Koppler 25 mit Vorteil seitlich unten am Handgerät 20 anordnen.

Ein an das Adaptergerät 23 angeschlossenes Datenendgerät 14, z.B. der genannte Personalcomputer, muss bevorzugt ausgerüstete sein zum Zusammenwirken mit der Anpasselektronik 26 im Sinne einer elektronischen Normschnittstelle für eine Datenübertragung. Das Datenendgerät 14 kann aber auch direkt, d.h. ohne genormte Schnittstelle, angeschlossen sein. Das andere Datenendgerät 15 kann im Falles eines digitalen Telekommunikationsnetzes 11 direkt mit diesem Netz 11 verbunden sein. Es ist weiter möglich, beide Endgeräte 14, 15 über Schnurlostelefone an das Netz 11 anzuschliessen. In diesem Fall sind zwei Schnittstelleneinrichtungen 10 der hier beschrieben Art notwendig. Für den Fall, dass das Telekommunikationsnetz 11 ein Analognetz ist, muss in die Anschlussleitungen 16 und 18 jeweils ein Modem eingefügt werden.

Der optische Koppler 25 kann statt des einen oder der zwei beschriebenen Paare aus Laserdioden 31, 32 und Fototransistoren 34, 35 auch mehr solcher Paare (z.B. vier) aufweisen, was das notwendige Betriebsprotokoll wesentlich vereinfacht. Weiter sind auch andere elektrooptische und optoelektrische Elemente möglich, z.B. Fotodioden. Die Zahl der optischen Fenster 33, 36 lässt sich auf eins reduzieren, wenn die elektrooptischen und optoelektrischen Elemente durch optische Massnahmen zur Strahlführung genügend entkoppelt sind, z.B. durch optische Linsen.

Das Adaptergerät 23 kann als alleinstehende Einheit konzipiert sein. Sie kann aber auch baulich mit dem einen Datenendgerät 14 vereinigt sein oder als leicht zu transportierende Einheit, die überall schnell und einfach einsetzbar ist. Beispielsweise kann sie beim Einsatz zusammen mit dem Handgerät 20 in der Hand gehalten werden.

Die Aktiverung der Datenübertragungsvorrichtung erfolgt durch einen jeweiligen Wählvorgang, der vom Handgerät 20 aus vorgenommen werden kann, vom Basisgerät 19 aus oder auch von von einem der Datenendgeräte 14, 15 aus. Dieser jeweilige Wählvorgang erfolgt dabei entweder manuell über eine Wähltastatur oder automatisch. Im letzteren Fall wird der Wählvorgang z.B. durch das Datenendgerät 14 über die Leitung 17 und die Anpasselektronik 26 ausgelöst und vom Handgerät 20 durchgeführt. Hierbei muss natürlich vorgängig das Handgerät 20 bereits in die mechanischen Führung 27 eingeführt sein.

Die beschriebene Vorrichtung ist nicht auf die geschilderten Varianten beschränkt. Vielmehr gibt es eine grosse Zahl weiterer Möglichkeiten, die mechanische Führung 27, den optische Koppler 25 samt der Fenster 33, 35 und die Art der verwendeten Funkgeräte abzuändern bzw. den speziellen Anforderungen anzupassen.

Der besondere Vorteil der Vorrichtung besteht darin, dass preisgünstige kommerzielle Funkgeräte, z.B. Handgeräte 20 der Schnurlostelefonie, mit geringem Aufwand abgeändert und in der geschilderten Art für allgemeine Datenanwendungen eingesetzt werden können. Hierdurch lassen sich Datenanwendungen, die bisher ein Modem oder eine vergleichbare Einheit erforderten, vergleichsweise äusserst preiswert realisieren. Weiter spielt die leichte Handhabbarkeit der in der Hand tragbaren Funkgeräte 20 eine wesentliche Rolle, da hierdurch Anwendungen möglich werden, die bisher wegen mangelnder Mobilität der Einrichtungen nicht infrage kamen.

Erwähnt sei zu letzterem beispielsweise das halbautomatische Ablesen von Verbrauchszählern wie z.B. Wärmemengenzählern in Privatwohnungen mit direkter Übermittlung der Ablesewerte zu einer Zentralstelle, wobei gleichzeitig eine Funktionsprüfung des jeweiligen Zählers von der Zentralstelle aus durchführbar ist. Erforderlich ist hierbei eine Führung 27 an den Zählern, in die jeweils von der Serviceperson ein Handgerät 20 angelegt wird, das mit der Zentralstelle über das öffentliche Netz durchgeschaltet ist.

Als weitere Anwendung wird ein Komforttelefon genannt, das halbmobil ausgebildet ist, indem es über ein integriertes Adaptergerät 23, die optische Schnittstelle 25 und ein Handgerät 20 sowie ein versteckt untergebrachtes Basisgerät 19 an das Netz 11 angeschlossen ist. Das Komforttelefon lässt sich in herkömmlicher Weise benutzen. Jedoch wird es bei Herausnahme des Handgerätes 20 aus der Führung 27 zum normalen Schnurlostelefon mit dessen Vorteilen.

## Patentansprüche

1. Schnittstelleneinrichtung (10) zum Anschliessen eines beliebigen Datenendgerätes (14) an ein Telekommunikationsnetz (11),
gekennzeichnet,
- durch ein ortsfestes Funkgerät (19),
- durch ein in der Hand tragbares Funkgerät (20),
- durch eine mechanische Halterung (23), und
- durch eine kontaktlose Schnittstelle (25),
- wobei die kontaktlose Schnittstelle (25) in zwei unabhängige Schnittstellenhälften (25.1, 25.2) aufgeteilt ist, von denen die eine (25.1) der mechanischen Halterung (23) und die andere (25.2) dem in der Hand tragbaren Funkgerät (20) zugeordnet ist,
- wobei die mechanischen Halterung (23), das in der Hand tragbare Funkgerät (20) und die Schnittstellenhälften (25.1, 25.2) so aufeinander abgestimmt sind, dass sie gemeinsam in engen mechanischen und optischen Kontakt bringbar sind, und
- wobei das in der Hand tragbare Funkgerät (20) und das ortsfeste Funkgerät (19) so ausgebildet und räumlich plaziert sind, dass zwischen ihnen eine Funkverbindung begrenzter Reichweite unterhaltbar ist.

2. Schnittstelleneinrichtung nach Anspruch 1.
dadurch gekennzeichnet,
dass das in der Hand tragbare Funkgerät (20) ein Handgerät und das ortsfeste Funkgerät (19) ein zugeordnetes Basisgerät eines Schnurlostelefons ist.

3. Schnittstelleneinrichtung nach Anspruch 1,
dadurch gekennzeichnet,
dass das in der Hand tragbare Funkgerät (20) ein Mobilfunkgerät und das ortsfeste Funkgerät (19) eine Antennen- und Netzstation eines Mobilfunknetzes ist.

4. Schnittstelleneinrichtung nach Anspruch 1,
dadurch gekennzeichnet,
- dass die kontaktlose Schnittstelle eine optische Schnittstelle (25) ist, die wenigstens ein elektrooptisches (31, 32) und ein zugeordnetes optoelektrisches Element (34, 35) umfasst, und
- dass wenigstens im in der Hand tragbaren Funkgerät (20) ein zugeordnetes optisches Fenster (33, 36) in der Gehäusewandung (30) vorgesehen ist.

5. Schnittstelleneinrichtung nach Anspruch 4,
dadurch gekennzeichnet,
- dass die optische Schnittstelle (25) zwei Paare aus elektrooptischen (31, 32) und zugeordneten optoelektrischen Elementen (34, 35) umfasst, und
- dass im in der Hand tragbare Funkgerät (20) zwei Fenster (33, 36) zur optischen Trennung der beiden Paare vorgesehen sind.

6. Schnittstelleneinrichtung nach Anspruch 1,
dadurch gekennzeichnet,
dass die mechanische Halterung (23) als eigenständige Einheit ausgebildet ist, an die das Datenendgerät (14) mit einer Leitung (17) anschliessbar ist.

7. Schnittstelleneinrichtung nach Anspruch 1,
dadurch gekennzeichnet,
dass die mechanische Halterung (23) als mit dem Datenendgerät (14) vereinigte Einheit ausgebildet ist.

8. Schnittstelleneinrichtung nach Anspruch 1,
dadurch gekennzeichnet,
dass der mechanischen Halterung (23) eine Anpasselektronik (26) zugeordnet ist, die in Richtung des Datenendgerätes (14) eine elektronische Normschnittstelle bildet und diese Normschnittstelle an die der Halterung (23) zugeordnete Schnittstellenhälfte (25.1) anpasst.

9. Schnittstelleneinrichtung nach Anspruch 1,
dadurch gekennzeichnet,
- dass die mechanische Halterung (23) so ausgebildet ist, dass das in der Hand tragbare Funkgerät (20) in eine nach oben offene Mulde (51) einsetzbar ist, und
- dass die eine Schnittstellenhälfte (25.1) an der unteren Anschlagfläche (52) der Mulde (51) und die andere Schnittstellenhälfte (25.2) an der unteren Stirnfläche des in der Hand tragbaren Funkgerätes (20) vorgesehen ist.

10. Verfahren zum Aufbau einer Datenübertragungsverbindung zwischen zwei beliebigen, paarweise zusammenschaltbaren Datenendgeräten (14, 15), die einen beliebig grossen Abstand voneinander aufweisen, unter Verwendung einer Schnittstelleneinrichtung (10) nach den vorhergehenden Ansprüchen und eines Telekommunikationsnetzes (11),
dadurch gekennzeichnet,
- dass das eine Datenendgerät (14) mit der Schnittstelleneinrichtung (10) und diese sowie das zweite Datenendgerät (15) mit dem Telekommunikationsnetz (11) verbunden werden,
- dass das in der Hand tragbare Funkgerät (20) und die mechanische Halterung (23) mechanisch eng zusammengefügt und hierbei die beiden Schnittstellenhälften (25.1, 25.2) zur Schnittstelle (25) gekoppelt werden, und
- dass durch einen von beliebiger Stelle ausgehenden Wählvorgang das in der Hand tragbare Funkgerät (20) mit dem ortsfesten Funkgerät (19) über eine Funkstrecke (21) verbunden und gleichzeitig das ortsfeste Funkgerät (19) zum zweiten Datenendgerät (15) signalmässig durchgeschaltet wird.

11. Verfahren nach Anspruch 10,
dadurch gekennzeichnet,
dass der Wählvorgang vom in der Hand tragbaren Funkgerät (20) ausgeht.

12. Verwendung einer Schnittstelleneinrichtung (10) und eines Telekommunikationsnetzes (11) nach den vorhergehenden Ansprüchen,
dadurch gekennzeichnet,
- dass eine Datenübertragungsverbindung zwischen zwei beliebigen, in beliebigem Abstand voneinander angeordneten, paarweise zusammenschaltbaren Datenendgeräten (14, 15) aufgebaut und für eine relativ kurze Zeit aufrechterhalten wird,
- wobei wenigstens das eine der beiden Datenendgeräte (14, 15) ansonsten im Inselbetrieb ohne Anschluss an das Netz (11) betrieben wird.
